(19) Europäisches Patentamt
European Patent Office
Office européen des brevets

(11) Veröffentlichungsnummer : **0 373 420 B1**

(12) # EUROPÄISCHE PATENTSCHRIFT

(45) Veröffentlichungstag der Patentschrift : **13.01.93 Patentblatt 93/02**

(51) Int. Cl.[5] : **C01G 3/00,** C22B 3/00

(21) Anmeldenummer : **89122028.7**

(22) Anmeldetag : **29.11.89**

(54) **Verfahren zur Abtrennung von Kupfer aus basisch reagierenden, wässrigen Lösungen.**

(30) Priorität : **10.12.88 DE 3841673**

(43) Veröffentlichungstag der Anmeldung : **20.06.90 Patentblatt 90/25**

(45) Bekanntmachung des Hinweises auf die Patenterteilung : **13.01.93 Patentblatt 93/02**

(84) Benannte Vertragsstaaten : **AT BE DE ES FR GB IT NL SE**

(56) Entgegenhaltungen :
**DE-A- 2 612 505**
**US-A- 3 674 464**
**US-A- 4 314 976**
**US-A- 4 500 494**
**CHEMISCHE BERICHTE, Band 121, 1988, Seiten 1823-1826; A. HASSNER et al.: "Alkylation and Aldol Reactions of Aldoxime Anions"**

(73) Patentinhaber : **HOECHST AKTIENGESELLSCHAFT**
**Postfach 80 03 20**
**W-6230 Frankfurt am Main 80 (DE)**

(72) Erfinder : **Weber, Jürgen, Dr. Dipl.-Chem.**
**Bunsenstrasse 17**
**W-4200 Oberhausen 11 (DE)**
Erfinder : **Lappe, Peter, Dr. Dipl.-Chem.**
**Eickenhof 34**
**W-4220 Dinslaken (DE)**
Erfinder : **De Win, Werner, Dipl.-Ing.**
**Heimstättenweg 18**
**W-4220 Dinslaken (DE)**

EP 0 373 420 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Flüssig-Flüssig-Extraktion von Kupfer aus basisch reagierenden, wäßrigen Lösungen. Als Extraktionsmittel werden Lösungen wasserunlöslicher Oxime in wasserunlöslichen organischen Lösungsmitteln eingesetzt.

Die Verwendung von Oximen zur Extraktion von Kupfer aus wäßrigen Lösungen ist bekannt.

So wird in der DE-OS 15 33 079 ein Verfahren zur selektiven Extraktion von Kupfer aus Lösungen mit niedrigem pH-Wert beschrieben. Als Extraktionsmittel verwendet man eine Mischung aus einem 2-Hydroxybenzophenonoxim und einem aliphatischen alpha-Hydroxyoxim, die in einem hydrophoben organischen Lösungsmittel gelöst sind. Der Zusatz des aliphatischen Oxims erhöht die Extraktionsgeschwindigkeit für das Kupfer.

Die DE-OS 21 25 095 betrifft die selektive Extraktion von Kupfer-, Nickel-, Eisen- und/oder Kobaltsalzen aus wäßrigen Lösungen mit einem Ketoxim, das in Kerosin, Toluol oder Xylol gelöst ist. Das Ketoxim entspricht der allgemeinen Formel $R-C(=NOH)-R^1$, wobei R ein geradkettiger oder verzweigter Alkylrest mit 7 bis 11 Kohlenstoffatomen ist und $R^1$ eine Phenylgruppe bedeutet, die in ortho-Stellung zum Rest R-C(=NOH)- eine OH-Gruppe und außerdem noch eine weitere Gruppe $R^2$ trägt. Gute Ergebnisse werden mit Lösungen erzielt, die das Kupfersalz in Konzentrationen von 0,05 bis 0,5 mol/l enthalten. Ein niedriger pH-Wert steigert die Kupferausbeute durch Extraktion.

Verbindungen der allgemeinen Formel

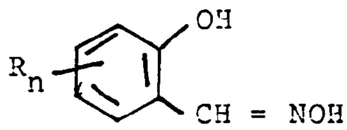

gelöst in organischen, mit Wasser nicht mischbaren Solventien, werden nach der DE-OS 23 34 901 zur Extraktion von Kupfer und gegebenenfalls auch Eisen, Kobalt und Zink aus ihren wäßrigen Lösungen verwendet. Das Verfahren ist insbesondere zur Abtrennung von Kupfer aus Eisen enthaltenden Lösungen geeignet.

Die DE-OS 26 12 505 beschreibt die Abtrennung von Kupfer aus sauren wäßrigen Lösungen mittels Flüssig-Flüssig-Extraktion mit einem Gemisch aus einem Hydroxy-oxim der allgemeinen Formel A-C(=NOH)-R, wobei A einen durch eine OH-Gruppe in ortho-Stellung substituierten aromatischen Rest und R ein Wasserstoffatom oder einen aliphatischen Rest bedeuten, und/oder einem 2-Hydroxy-benzophenon-oxim sowie einem weiteren Oxim, die in einem organischen Lösungsmittel gelöst sind.

Die bekannten Verfahren zur Abtrennung von Kupfer aus wäßrigen Lösungen durch Extraktion mit Oximen genügen noch nicht allen Forderungen der Praxis. Insbesondere die Vollständigkeit der Abtrennung und/oder die Wirtschaftlichkeit des Extraktionsmittels sind nicht immer befriedigend gelöst.

Es bestand daher die Aufgabe, ein Verfahren zur Extraktion von Kupfer aus wäßrigen Lösungen zu entwickeln, das die aufgezeigten Mängel vermeidet und eine weitgehend vollständige und wirtschaftliche Kupferabtrennung erlaubt.

Die vorstehende Aufgabe wird gelöst durch ein Verfahren zur Abtrennung von Kupfer aus basisch reagierenden, wäßrigen Lösungen durch Extraktion mit einem Oxim, das in einem mit Wasser nicht mischbaren organischen Lösungsmittel gelöst ist. Die neue Arbeitsweise ist dadurch gekennzeichnet, daß als Oxim eine Verbindung der allgemeinen Formeln

$$H(CH_2)_n - CH(OH) - CH(R) - CH(= NOH)$$

oder

$$H(CH_2)_n - \underset{\displaystyle CH_2OH}{\underset{|}{C}}(R) - CH(=NOH)$$

verwendet wird, wobei R jeweils für einen Alkylrest mit 2 bis 8 Kohlenstoffatomen steht und n jeweils eine ganze Zahl von 2 bis 10 bedeutet.

Das erfindungsgemäße Verfahren zeichnet sich durch den Einsatz leicht zugänglicher Oxime aus, die bereits in wenigen Extraktionsschritten eine fast vollständige Abtrennung des Kupfers aus seiner wäßrigen Lösung ermöglichen.

Von den Oximen, die unter die allgemeinen Formeln fallen, haben sich 3-Hydroxy-2-ethylhexanaloxim, 3-Hydroxy-2-heptylundecanaloxim und 2-Hydroxymethyl-2-methylpentanaloxim besonders bewährt.

Zur Herstellung der Oxime geht man von den ihnen zugrundeliegenden Hydroxyaldehyden aus. Die 3-Hydroxy-2-alkylalkanale werden durch Aldoladdition, zweckmäßig in Gegenwart eines sekundären Amins als Katalysator, aus Alkanalen gewonnen. So erhält man z.B. das 3-Hydroxy-2-ethylhexanal besonders einfach aus n-Butanal mit Di-n-butylamin als Katalysator. 2-Alkyl-2-hydroxymethylalkanale lassen sich nach einem der DE-PS 19 57 591 beschriebenen Verfahren aus 2-Alkylalkanalen und Formaldehyd in Gegenwart tertiärer Amine herstellen.

Das Aldol kann nach Abtrennung aus dem Reaktionsgemisch ohne weitere Reinigung mit einem Hydroxylaminsalz, z.B. dem Sulfat, und Alkalihydroxid in wäßriger Phase umgesetzt werden. Man läßt gegebenenfalls unter gelindem Erwärmen reagieren und trennt schließlich das rohe, in Wasser nicht lösliche Oxim von der Wasserphase ab. Die Aufkonzentrierung des Oxims erfolgt in bekannter Weise, z.B. unter Verwendung eines Dünnschichtverdampfers. Es hat sich gezeigt, daß es nicht erforderlich ist, das Oxim in hochreiner Form einzusetzen. Auch Produkte technischer Reinheit, die vorwiegend die Oxime entsprechend der Erfindung und außerdem Nebenprodukte der Aldoladdition und der Oximbildung enthalten, haben sich für die Kupferabtrennung hervorragend bewährt. Ebenso können Gemische der erfindungsgemäß angewandten Oxime eingesetzt werden.

Zur Durchführung der Extraktion werden die Oxime in organischen Solventien gelöst, die mit Wasser nicht mischbar sind. Geeignet sind aliphatische Kohlenwasserstoffe wie Hexan und Heptan, niedrig siedende Erdölfraktionen vom Kerosintyp (Siedebereich 175 bis 325°C), aromatische Kohlenwasserstoffe wie Benzol, Toluol, Xylol, chlorierte Kohlenwasserstoffe wie Chloroform, Tetrachlorkohlenstoff, Dichlorethan sowie höhere Alkohole wie n-Octanol, Isooctanol, Isononanol, Decanol und Isotridecanol. Besonders geeignete Lösungsmittel sind Isononanol und Isotridecanol.

Die Konzentration des Extraktionsmittels in der Extraktionslösung kann in weiten Grenzen variieren. Sie beträgt im allgemeinen 0,02 bis 2 Mol/l, vorzugsweise 0,1 bis 0,15 mol/l Extraktionslösung. Es kann sich empfehlen, die Löslichkeit des Oxims im organischen Lösungsmittel, insbesondere bei der Herstellung höher konzentrierter Lösungen durch Zusatz eines Lösungsvermittlers zu verbessern. Geeignet für diesen Zweck sind z.B. aliphatische Alkohole mit 6 bis 18 Kohlenstoffatomen wie Hexanol, n- bzw. i-Octanol, Isononanol, Decanol, Isotridecanol. Die Lösungsvermittler werden üblicherweise in einer Menge von 1 bis 25 Gew.-%, vorzugsweise 2 bis 10 Gew.-%, bezogen auf das Gewicht der Extraktionslösung, eingesetzt. Besonders bewährt haben sich Gemische aus Kohlenwasserstoffen und den vorstehend genannten Alkoholen.

Das abzutrennende Kupfer liegt als Salz in wäßriger Lösung vor. Die Konzentration des Kupfers in dieser Lösung kann sich über einen Bereich von etwa 0,1 bis etwa 1,0 Gew.-%, insbesondere 0,1 bis 0,3 Gew.-%, bezogen auf die Kupfersalzlösung, erstrecken.

Ein wichtiges Merkmal des erfindungsgemäßen Prozesses ist, daß die Extraktion des Kupfersalzes aus einer basisch reagierenden Lösung erfolgt. Ihr pH-Wert beträgt 8 bis 12, vorzugsweise 9 bis 10. Die Einstellung des gewünschten pH-Wertes erfolgt bei sauer reagierenden Lösungen zweckmäßig durch Zusatz von Ammoniak, bei Lösungen mit einem pH-Wert >12 durch Zusatz von Mineralsäuren, insbesondere Schwefelsäure.

Das Verhältnis der Volumina Extraktionslösung und Kupfersalzlösung während der Extraktion kann in weiten Grenzen variieren. Im allgemeinen beträgt das Volumenverhältnis von organischer Extraktionslösung zu wäßriger Kupfersalzlösung 1 : 10 bis 5 : 1, vorzugsweise 1 : 1.

Auch die Extraktionstemperatur kann sich über weite Bereiche erstrecken. Üblicherweise extrahiert man bei 15 bis 60°C und vorzugsweise bei 20 bis 40°C.

Die Extraktion wird in den für Flüssig-Flüssig-Extraktionen bekannten Apparaturen durchgeführt. Dabei bringt man die zu extrahierende wäßrige Lösung und die nichtwäßrige Extraktionslösung durch Mischen im Gleichstrom oder im Gegenstrom, kontinuierlich oder diskontinuierlich in Kontakt. Nach Einstellung des Extraktionsgleichgewichts werden die Phasen voneinander getrennt und aufbereitet.

Die Gewinnung des Kupfers aus der organischen Phase erfolgt nach Verfahren des Standes der Technik. Es empfiehlt sich, im Rahmen des erfindungsgemäßen Verfahrens die organische, Kupfer enthaltende Lösung mit einer verdünnten, wäßrigen Mineralsäurelösung, deren pH-Wert niedriger als 2, vorzugsweise etwa 1 ist, zu behandeln. Nach Trennung von wäßriger und organischer Phase wird die organische Phase erneut mit einer Mineralsäurelösung gleichen pH-Wertes in Berührung gebracht, um weiteres Kupfer aus der organischen Lösung aufzunehmen. Die Umsetzungen mit der Mineralsäure erfolgen bei Temperaturen von 10 vis 30°C, vorzugsweise 15 bis 25°C. Als Mineralsäuren werden z.B. Salzsäure, Schwefelsäure, Phosphorsäure oder Salpetersäure eingesetzt, Schwefelsäure ist bevorzugt. Die Konzentration der Mineralsäure in der verdünnten wäßrigen Lösung beträgt 0,1 bis 3,0 mol/l, vorzugsweise 1,5 bis 2,0 mol Säure/l und insbesondere 0,3 bis 0,7 mol/l. Der zur Extraktion verwendeten Oximlösung können weitere Stoffe, deren Eignung, die Extraktion mit Oximen zu verbessern, bekannt, zugesetzt werden. Bewährt haben sich z.B. tertiäre Carbonsäuren der allgemeinen Formel $R^1R^2C(CH_3){\cdot}COOH$, wobei $R^1$ ein Alkylrest mit 1 bis 3 und $R^2$ ein Alkylrest mit 3 bis 5 Kohlenstoffatomen sind.

Das neue Verfahren zeichnet sich durch schnelle Einstellung des Extraktionsgleichgewichts und annähernd vollständige Extraktion des Kupfers aus.

Die folgenden Beispiele erläutern die Erfindung, ohne sie auf diese speziellen Ausführungsformen zu beschränken.

Herstellung von 3-Hydroxy-2-ethylhexanaloxim

6,45 g Di-n-butylamin (0,05 mol) werden unter Stickstoff in destilliertes Wasser eingerührt und auf 40°C erwärmt. Darauf fügt man innerhalb von 30 min 720 g n-Butanal (10 mol) und weitere 6,45 g Di-n-butylamin zu. Die Temperatur steigt auf 60°C an. Nach beendeter Zugabe der Reaktanten wird das Gemisch noch 1 h bei 60°C gerührt. Man kühlt auf 40°C ab und trennt die Phasen. 724 g Rohaldol mit folgender Zusammensetzung (in Gew.-%, bezogen auf das Gemisch),

| | |
|---|---|
| N-Butanal | 27,8 |
| Di-n-butylamin | 1,8 |
| 2-Ethylhexenal | 1,4 |
| 3-Hydroxy-2-ethylhexanal | 57,0 |
| Komponenten | 4,0 |
| Wasser | 8,0 |

werden erhalten.

Zur Herstellung des 3-Hydroxy-2-ethylhexanaloxims geht man von dem Rohaldehyd aus.

624 g Hydroxylaminsulfat (3,8 mol) werden in 2458 g Wasser gelöst und unter Rühren in Stickstoffatmosphäre auf 40°C erwärmt. Anschließend fügt man 904 g 33,6 %ige Natronlauge (7,6 mol NaOH) zu. In diese Lösung läßt man unter Erwärmen auf 80°C innerhalb von 30 min 720 g Rohaldol einfließen. Nach 1 h Nachreaktion trennt man die Phasen, 788 g Rohoxim der Zusammensetzung (in Gew.-%)

| | |
|---|---|
| n-Butanaloxim | 25,0 |
| 2-Ethylhexenaloxim | 1,0 |
| 3-Hydroxy-2-ethylhexanaloxim | 58,8 |
| Komponenten | 4,4 |
| Wasser | 10,8 |

werden erhalten.

Durch Einsatz eines Dünnschichtverdampfers bei 130°C und 13,3 hPa wird aus dem Rohoxim 3-Hydroxy-2-ethylhexanaloxim mit etwa 95 %iger Reinheit isoliert und als solches in Gegenwart eines Isononanol-Kerosin-Gemisches zur Extraktion eingesetzt.

Beispiel 1

100 ml einer Kupfersulfatlösung (Cu-Gehalt: 209,7 mg entspr. 3,3 mmol), die durch Zugabe von Ammoniak auf einen pH-Wert von 10 eingestellt worden ist, werden fünfmal jeweils 2 min mit je 100 ml einer Lösung von 0,01 mol 3-Hydroxy-2-ethylhexanaloxim (etwa 95 %ig) und 0,023 mol Isononanol in 94 ml Kerosin extrahiert. Der Verlauf der Extraktion ist nachstehend wiedergegeben.

| | Cu in der Extraktionslösung (mg) | Cu bezogen auf Einsatz (in %) |
|---|---|---|
| 1. Stufe | 124,1 | 59,2 |
| 2. Stufe | 25,2 | 12,0 |
| 3. Stufe | 10,7 | 5,1 |
| 4. Stufe | 6,2 | 2,9 |
| 5. Stufe | 5,2 | 2,5 |
| insgesamt extrahiert: | 171,4 | 81,7 |

Beispiele 2 bis 5

In den folgenden Beispielen wird die Extraktion einer Kupfersalzlösung beschrieben, die je Liter 33 mmol $CuSO_4 \cdot 5H_2O$ enthält. Als Extraktionsmittel verwendet man ein Rohprodukt mit einem Gehalt von etwa 60 Gew.-% 3-Hydroxy-2-ethyl-hexanaloxim unter Zusatz beschriebener Lösemittel bzw. Lösevermittler, die zusätzlich die hydrophoben Eigenschaften verbessern.

Jeweils 100 ml der Kupfersulfatlösung werden fünfmal mit je 100 ml Extraktionslösung jeweils 2 min. intensiv gemischt. Darauf werden die Phasen getrennt, in der organischen Lösung wird der Cu-Gehalt bestimmt.

Die Einstellung des pH-Wertes in der Kupfersulfatlösung erfolgt durch Zugabe von Ammoniak. In den Beispielen 2, 3 und 4 wird der Kupfersalzlösung außerdem noch $Na_2SO_4$ zugesetzt.

| Beispiel | 2 | 3 | 4 | 5 | 6 |
|---|---|---|---|---|---|
| Cu-Lösung (mg Cu/l) | 2097 | 2097 | 2097 | 2097 | 2097 |
| pH-Wert | 10 | 10 | 10 | 10 | 9 |
| $Na_2SO_4$-Zus. (Mol/l) | - | 0,5 | - | 0,5 | 0,5 |
| Extraktionslsg. (Mol/l) | | | | | |
| n-Butanaloxim | 0,12 | 0,08 | 0,16 | 0,020 | 0,04 |
| 2-Ethylhexanaloxim | 0,002 | 0,002 | 0,004 | 0,0005 | 0,001 |
| 3-Hydroxy-oxim | 0,1 | 0,1 | 0,2 | 0,025 | 0,05 |
| Isononylalkohol | 0,4 | 0,4 | 0,8 | 0,1 | auf 1 l |
| Kerosin | auf 1 Liter aufgefüllt | | | | - |
| Cu:3-Hydroxyoxim (in mol) | 1:3 | 1:3,3 | 1:6 | 1:0,75 | 1:1,5 |
| Cu:ges. Oxim (in mol) | 1:6,7 | 1:5,5 | 1:11 | 1:1,26 | 1:2,7 |
| Organ. Phase | | | | | |
| 1.Stufe mg Cu/% v. Einsatz | 195,2<br>98,3 | 187,5<br>89,7 | 137,5<br>65,7 | 127,4<br>60,9 | 88<br>42,0 |
| 2.Stufe mg Cu/% v. Einsatz | 9<br>4,3 | 15,3<br>7,3 | 21,3<br>10,2 | 20,8<br>9,9 | 29<br>13,8 |
| 3.Stufe mg Cu/% v. Einsatz | 2,5<br>1,2 | 0,9<br>0,4 | 8,8<br>4,2 | 5,7<br>2,7 | 3,9<br>1,8 |
| 4. Stufe mg Cu/% v. Einsatz | 1,2<br>0,6 | 0,8<br>0,4 | 6,5<br>3,1 | 2,2<br>1,1 | 0,7<br>0,3 |
| 5. Stufe mg Cu/% v. Einsatz | 0,8<br>0,4 | 0,6<br>0,3 | 5,3<br>2,5 | 0,9<br>0,4 | 0,4<br>0,2 |
| Ausbringung mg Cu/% v. Einsatz | 208,7<br>99,8 | 205,1<br>97,8 | 179,4<br>85,7 | 156,9<br>75 | 122<br>58,2 |

Beispiel 7

Zur Regenerierung wird die Kupfer enthaltende Oximlösung mit einer wäßrigen Minalsäurelösung behandelt. 400 ml Extraktionslösung (Cu-Gehalt: 136,4 mg) werden mit 500 ml Wasser vermischt; durch Zugabe von Schwefelsäure stellt man einen pH-Wert von 1 ein. Nach 5 min intensiven Mischens und anschließender Phasentrennung enthält die wäßrige Lösung 135 mg Cu, d.h. 98,7 % des in der organischen Phase enthaltenen Kupfers werden zurückgewonnen.

Beispiel 8

300 ml regenerierte Oximlösung aus Beispiel 7 werden 5 min mit 400 ml einer Kupfersalzlösung (Cu-Gehalt: 839 mg/l) deren pH-Wert 10 ist, intensiv gemischt. Nach einmaliger Extraktion enthält die Extraktionslösung 680,8 mg Cu, d.h. 81,1 % des in der wäßrigen Lösung enthaltenen Kufers werden abgetrennt.

Herstellung von 3-Hydroxy-2-heptylundecanaloxim

3,23 g Di-n-butylamin (0,025 mol) werden unter Stickstoff in destilliertes Wasser eingerührt und auf 40°C erwärmt. Anschließend gibt man 710 g n-Nonanal (5 mol) und weitere 3,23 g Di-n-butylamin hinzu. Die Temperatur steigt auf 50°C an. Nach beendeter Zugabe der Reaktanten wird das Gemisch hoch 1 h bei 60°C gerührt. Man kühlt auf 40°C ab und trennt die Phasen. 713 g Rohaldol mit folgender Zusammensetzung (in Gew.-%, bezogen auf das Gemisch),

| | |
|---|---|
| Di-n-butylamin | 0,4 |
| 2-Methyloctanal | 2,3 |
| n-Nonanal | 24,2 |
| 2-Heptylundecenal | 10,9 |
| 3-Hydroxy-2-heptylundecanal | 61,4 |
| Wasser | 0,8 |

werden erhalten.

Durch Dünnschichtdestillation des Rohaldols gelangt man zu einem Produkt folgender Zusammensetzung (in Gew.-%):

| | |
|---|---|
| Vorlauf | 1,6 |
| Nonanal | 15,2 |
| 2-Heptyl-2-undecenal | 12,5 |
| 3-Hydroxy-2-heptylundecanal | 70,4 |
| Nachlauf | 0,3 |

Dieses Produkt wird zur Herstellung des 3-Hydroxy-2-heptylundecanaloxims verwendet.

98,5 g Hydroxylaminsulfat (0,6 mol) werden in 171 g Wasser gelöst und unter Rühren in Stickstoffatmosphäre auf 40°C erwärmt. Anschließend fügt man 120 g 33,3 %ige Natronlauge (1 mol NaOH) zu. In diese Lösung läßt man innerhalb von 30 min 141,8 g Aldol unter Erwärmen auf 80°C einfließen. Nach 1 h Nachreaktion trennt man die Phasen, 141,3 g Rohoxim der Zusammensetzung (in Gew.-%)

| | |
|---|---|
| Nonanaloxim | 16,1 |
| 2-Heptyl-2-undecenaloxim | 12,7 |
| 3-Hydroxy-2-heptylundecanaloxim | 71,2 |

werden erhalten. Dieses Rohoxim wird für die nachfolgend beschriebene Extraktion verwendet.

Beispiel 9

100 ml einer Kupfersulfatlösung (Cu-Gehalt: 209,7 mg, entspr. 3,3 mmol), die durch Zugabe von Ammoniak auf einen pH-Wert von 10 eingestellt wird, wird fünfmal jeweils 2 min mit je 100 ml einer Lösung von 0,01 mol 3-Hydroxy-2-heptylundecanaloxim und 0,02 mol Isononanol in Kerosin gelöst, extrahiert. Der Verlauf der Extraktion ist nachstehend wiedergegeben.

| | Cu in der Extraktionslösung (mg) | Cu bezogen auf Einsatz (in %) |
|---|---|---|
| 1. Stufe | 130 | 61,9 |
| 2. Stufe | 36,2 | 17,3 |
| 3. Stufe | 24,4 | 11,6 |
| 4. Stufe | 13,7 | 6,5 |
| 5. Stufe | 5,4 | 2,5 |
| insgesamt extrahiert | 209,7 | 100 |

Herstellung von 2-Hydroxymethyl-2-methylpentanaloxim

71,65 g Tri-n-propylamin (0,5 mol) werden unter Stickstoff zusammen mit 424,5 g Formalinlösung (37,1 %ig ≙ 5,25 mol) auf 60°C erwärmt. Innerhalb von 20 min setzt man 501 g 2-Methylpentanal (5 mol) zu und erhitzt das Gemisch unter Rückfluß 6 h auf 100°C. Nach Abkühlung auf Raumtemperatur werden die Phasen getrennt. Man erhält 750 g Rohaldol folgender Zusammensetzung (in Gew.-%, bezogen auf das Gemisch):

| | |
|---|---|
| Formaldehyd | 1,4 |
| Tri-n-propylamin | 7,6 |
| 2-Methylpentanal | 3,9 |
| 2-Hydroxymethyl-2-methylpentanal | 74,3 |
| Komponente 1 | 4,4 |
| Komponente 2 | 3,7 |
| Wasser | 4,7 |

Durch fraktionierte Destillation des Rohaldols gelangt man zu einem Produkt folgender Zusammensetzung (in Gew.-%, bezogen auf das Gemisch):

| | |
|---|---|
| Vorlauf | 3,5 |
| 2-Methylpentanal | 3,2 |
| Zwischenlauf | 3,2 |
| 2-Hydroxymethyl-2-methylpentanal | 90,1 |

Dieses Produkt wird zur Herstellung von 2-Hydroxymethyl-2-methylpentanaloxim verwendet.

50,9 g Hydroxylaminsulfat (0,31 mol) werden in 88,4 g Wasser gelöst und unter Rühren in Stickstoffatmosphäre auf 40°C erwärmt. Danach fügt man 60 g 33,3 %ige Natronlauge (0,5 mol) zu. In diese Lösung läßt man innerhalb von 30 min 72,2 g der Aldol-Fraktion (0,5 mol) unter Erwärmen auf 80°C einfließen. Nach 1 h Nachreaktion trennt man die Phasen. 88,7 g Rohoxim der Zusammenstzung (in Gew.%)

| | |
|---|---|
| Vorlauf | 0,2 |
| 2-Methylpentanaloxim | 2,9 |
| 2-Hydroxymethyl-2-methylpentanal | 2,2 |
| Zwischenlauf | 5,3 |
| 2-Hydroxymethyl-2-methylpentanaloxim | 30,5 |
| Wasser | 8,9 |

werden erhalten.

Beispiel 10

100 ml einer Kupfersulfatlösung (Cu-Gehalt: 209,7 mg, entspr. 3,3 mol), die durch Zugabe von Ammoniak auf einen pH-Wert von 10 eingestellt wird, wird fünfmal jeweils 2 min mit je 100 ml einer Lösung von 0,01 mol 2-Hydroxymethyl-2-methylpentanaloxim und 0,02 mol Isononanol in Kerosin extrahiert. Der Verlauf der Extraktion ist nachstehend wiedergegeben.

| | Cu in der Extraktionslösung (mg) | Cu bezogen auf Einsatz (in %) |
|---|---|---|
| 1. Stufe | 130 | 61,3 |
| 2. Stufe | 7,6 | 3,6 |
| 3. Stufe | 2,8 | 1,3 |
| 4. Stufe | 1,6 | 0,8 |
| 5. Stufe | 1,0 | 0,5 |
| insgesamt extrahiert: | 143 | 68,2 |

## Patentansprüche

1. Verfahren zur Abtrennung von Kupfer auf basisch reagierenden wäßrigen Lösungen durch Extraktion mit einem Oxim, das in einem mit Wasser nicht mischbaren organischen Lösungsmittel gelöst ist, dadurch gekennzeichnet, daß als Oxim eine Verbindung der allgemeinen Formeln

$$H(CH_2)_n - CH(OH) - CH(R) - CH(= NOH)$$

oder

$$H(CH_2)n - C(R) - CH(=NOH)$$
$$CH_2OH$$

verwendet wird, wobei R jeweils für einen Alkylrest mit 2 bis 8 Kohlenstoffatomen steht und n jeweils eine ganze Zahl von 2 bis 10 bedeutet.

2. Verfahren nach Anspruch 1, dadurch gekennzeichnet, daß als Oxim 3-Hydroxy-2-ethylhexanaloxim, 3-Hydroxy-2-heptylundecanaloxim oder 2-Hydroxymethyl-2-methylpentanaloxim verwendet wird.

3. Verfahren nach Anspruch 1 oder 2, dadurch gekennzeichnet, daß als organisches Lösungsmittel aliphatische oder aromatische Kohlenwasserstoffe, chlorierte Kohlenwasserstoffe oder höhere Alkohole eingesetzt werden.

4. Verfahren nach Anspruch 3, dadurch gekennzeichnet, daß die organischen Lösungsmittel einen Lösungvermittler enthalten.

5. Verfahren nach Anspruch 4, dadurch gekennzeichnet, daß der Lösungsvermittler ein aliphatischer Alkohol mit 6 bis 18 Kohlenstoffatomen ist.

6. Verfahren nach einem oder mehreren der Ansprüche 1 bis 5, dadurch gekennzeichnet, daß die Konzentration des Oxims in der Lösung 0,02 bis 2 mol/l beträgt.

7. Verfahren nach einem oder mehreren der Ansprüche 1 bis 6, dadurch gekennzeichnet, daß der Ph-Wert der Kupfersalzlösung 8 bis 12, vorzugsweise 9 bis 10 beträgt.

8. Verfahren nach einem oder mehreren der Ansprüche 1 bis 7, dadurch gekennzeichnet, daß das Volumenverhältnis von Oxim-Lösung zu wäßriger Kupfersalzlösung 1 : 10 bis 5 : 1, vorzugsweise 1 : 1 beträgt.

9. Verfahren nach einem oder mehreren der Ansprüche 1 bis 8, dadurch gekennzeichnet, daß die Extraktion bei Temperaturen von 15 bis 60°, vorzugsweise 20 bis 40°C, erfolgt.

## Claims

1. A process for separating copper from aqueous base solutions by extraction with an oxime, which is dissolved in an organic solvent immiscible in water, characterised in that a compound of the following general formulae is used as an oxime:

$$H(CH_2)_n - CH(OH) - CH(R) - CH(= NOH)$$

or

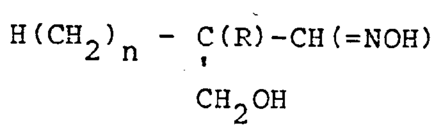

where R stands for an alkyl group with 2 to 8 carbon atoms and n denotes an integer from 2 to 10.

2. A process according to claim 1, characterised in that 3-hydroxy-2-ethylhexanaloxime, 3-hydroxy-2-heptylundecanaloxime or 2-hydroxymethyl-2-methylpentanaloxime is used as the oxime.

3. A process according to claim 1 or 2, characterised in that aliphatic or aromatic hydrocarbons, chlorinated hydrocarbons or higher alcohols are used as the organic solvent.

4. A process according to claim 3, characterised in that the organic solvents contain a solubiliser.

5. A process according to claim 4, characterised in that the solubiliser is an aliphatic alcohol with 6 to 18 carbon atoms.

6. A process according to one or more of the claims 1 to 5, characterised in that the concentration of the oxime in the solution is 0.02 to 2 moles/litre.

7. A process according to one or more of the claims 1 to 6, characterised in that the pH value of the copper salt solution is 8 to 12, preferably 9 to 10.

8. A process according to one or more of the claims 1 to 7, characterised in that the volume ratio of oxime solution to aqueous copper salt solution is 1 : 10 to 5 : 1, preferably 1 : 1.

9. A process according to one or more of the claims 1 to 8, characterised in that extraction takes place at temperatures of 15 to 60°C, preferably 20 to 40°C.

## Revendications

1. Procédé pour la séparation du cuivre de solutions aqueuses à réaction alcaline par extraction par une oxime qui est dissoute dans un solvant organique non miscible avec l'eau, caractérisé en ce que l'on utilise comme oxime un composé de formule générale

$$H(CH_2)_n - CH(OH) - CH(R) - CH(=NOH)$$

ou

$$H(CH_2)_n - \underset{\displaystyle |\atop CH_2OH}{C(R)} - CH(=NOH)$$

dans lesquelles R représente chaque fois un reste alkyle en $C_2$-$C_8$ et n représente chaque fois un nombre entier de 2 à 10.

2. Procédé selon la revendication 1, caractérisé en ce que l'on utilise comme oxime la 3-hydroxy-2-éthylhexanal-oxime, la 3-hydroxy-2-heptylundécanal-oxime ou la 2-hydroxyméthyl-2-méthylpentanal-oxime.

3. Procédé selon la revendication 1 ou 2, caractérisé en ce que l'on utilise comme solvant organique des hydrocarbures aliphatiques ou aromatiques, des hydrocarbures chlorés ou des alcools supérieurs.

4. Procédé selon la revendication 3, caractérisé en ce que les solvants organiques contiennent un agent solubilisant.

5. Procédé selon la revendication 4, caractérisé en ce que l'agent solubilisant est un alcool aliphatique en $C_6$-$C_{18}$.

6. Procédé selon une ou plusieurs revendications 1 à 5, caractérisé en ce que la concentration de l'oxime dans la solution est de 0,02 à 2 mol/l.

7. Procédé selon une ou plusieurs des revendications 1 à 6, caractérisé en ce que le pH de la solution de sel de cuivre est de 8 à 12, de préférence 9 à 10.

8. Procédé selon une ou plusieurs des revendications 1 à 7, caractérisé en ce que le rapport en volume de la solution d'oxime à la solution aqueuse de sel de cuivre est de 1 : 10 à 5 : 1, de préférence 1 : 1.

9. Procédé selon une ou plusieurs des revendications 1 à 8, caractérisé en ce que l'extraction s'effectue à des températures de 15 à 60°C, de préférence 20 à 40°C.